# EUROPÄISCHE PATENTSCHRIFT

(11) **EP 1 533 630 B1**
(45) Veröffentlichungstag und Bekanntmachung des Hinweises auf die Patenterteilung: **20.09.2006**
(21) Anmeldenummer: 04023321.5
(22) Anmeldetag: 30.09.2004
(51) Int. Cl.: G01V 8/20

(54) **Sicherheits-Lichtgitter**
Security light curtain
Barrière lumineuse de sécurité

(30) Priorität: 20.11.2003 DE 20317976 U
(43) Veröffentlichungstag der Anmeldung: 25.05.2005
(73) Patentinhaber: SICK AG, 79183 Waldkirch (DE)
(72) Erfinder: Rieger, Daniel, 79102 Freiburg (DE)
(74) Vertreter: Ludewigt, Christoph

(56) Entgegenhaltungen:
- EP-A- 0 605 252
- EP-A- 1 116 963
- EP-A- 1 331 433
- DE-A- 2 343 096
- FR-A- 2 757 980
- PATENT ABSTRACTS OF JAPAN Bd. 0051, Nr. 91 (P-092), 5. Dezember 1981 (1981-12-05) -& JP 56 114780 A (MATSUSHITA ELECTRIC WORKS LTD), 9. September 1981 (1981-09-09)

## Beschreibung

Die Erfindung betrifft ein Sicherheits-Lichtgitter zur Überwachung eines Schutzfeldes gemäß dem Oberbegriff des Anspruchs 1.

Derartige Lichtgitter für die Sicherheitstechnik dienen beispielsweise zur Absicherungen von gefahrbringenden Maschinen, wie Gesenkbiegepressen, Stanzmaschinen, Schneidwerkzeugen, Schweißrobotern und dergleichen. Das Sicherheits-Lichtgitter schützt dabei vor unzulässigem Eindringen in Gefahrenbereiche, indem das durch das Lichtgitter aufgespannte Schutzfeld auf Verletzung durch ein Objekt überwacht wird. Wird das Schutzfeld verletzt gibt das Sicherheits-Lichtgitter ein entsprechendes Signal aus, dass z. B. ein Abschalten der gefahrbringenden Maschine auslösen kann.

Entsprechend der Anwendung muss das Lichtgitter vor einem Ersteinsatz oder auch nach einem Austausch konfiguriert werden. In einer solchen Konfiguration wird beispielsweise eingestellt,
- ob eine Schützkontrolle aktiv oder inaktiv sein soll,
- ob eine Wiederanlaufsperre aktiv oder inaktiv sein soll,
- ob eine hohe oder niedrige Reichweite eingestellt werden soll,
- welches Signal an einem Diagnoseausgang anliegen soll,
- welche einer vorgegebenen Auswahl von Muting-Zeiten eingestellt werden soll.

Es sind Lichtgitter bekannt, bei denen die Konfigurationsdaten mit Hilfe von Drahtbrücken am Lichtgitter selbst oder an einem zugehörigen Steuergerät eingestellt werden. Dies ist nicht nur zeitaufwändig und arbeitsintensiv, sondern es müssen im Gerät bestimmte Verfahren eingestellt sein, damit bei einem einfachen Fehler, wie Drahtbruch, die eingestellte Funktion sich nicht unbeabsichtigt ändert. Diese Konfigurationsart birgt daher ein Sicherheitsrisiko und ist nicht sehr komfortabel.

Weiter sind sogenannte DIP-Schalter zur Konfiguration bekannt, die aber den Nachteil haben, dass sie nur von einem Fachmann bedient werden können und die im Inneren des Geräts angeordnet sind. Zum Einstellen ist daher stets ein Öffnen des Gerätes notwendig.

Darüber hinaus sind Sicherheits-Lichtgitter bekannt, bei denen die Konfiguration über eine graphische Bedienoberfläche eingestellt werden kann. Dazu bedarf es einerseits eines Computers oder einer SPS und einer entsprechenden Schnittstelle am Lichtgitter zur Verbindung mit dem Computer oder der SPS. Dadurch ist zwar eine komfortable Eingabe gegeben, aber in nachteiliger Weise bedarf es dafür eines hohen Aufwandes. Es muss ein Zusatzgerät, wie ein PC und eine Gerätekommunikationsschnittstelle bereitgestellt werden.

Aus der DE-A-23 43 096 ist ein Lichtvorhang bekannt mit einer Anzahl von Fotozellen welche ausgeschaltet werden können, um bestimmte Werkstücke durch den Lichtvorhang zu transportieren, ohne ein Abschaltsignal zu erzeugen. Zur Ausschaltung der Fotozellen ist eine Eingabevorrichtung vorgesehen, die aus einer Vielzahl von Tasten besteht, die in eine horizontale und vertikale Zahlentastreihe mit den Ziffern 0 bis 9 aufgeteilt ist. Die horizontale und vertikale Zahlentastreihe ist den horizontalen und vertikalen Fotozellen der Empfängerleisten zugeordnet. Eine in Zentimetern ermittelte Abmessung eines Werkstückes kann nun für die horizontale und vertikale Abmessung mit Hilfe der Tasten eingegeben werden und ausgehend von einem zentralen Mittelpunkt werden die betreffenden Fotozellen deaktiviert. Eine Anzeigevorrichtung ist zur Anzeige eines Einschaltzustandes des Lichtvorhanges vorgesehen.

Aus der FR-A-2757980 ist eine Sicherheitsvorrichtung bekannt aus zwei Lichtleisten an der Kommandotasten angeordnet sind. Die beiden Lichtleisten sind dabei an einer ersten Seite angeordnet und auf einer gegenüberliegenden Seite ist eine Spiegelanordnung angebracht um einzelne Lichtstrahlen ausgehend von einzelnen Sendeelmente auf einzelne Empfängeelemente der Lichtleisten umzulenken. Hierbei braucht lediglich die Seite mit den Lichtleisten mit Kommandotasten ausgebildet werden.

Aus der EP-A-1 116 963 ist ein Abstandssensor bekannt, welcher nach dem Triangulationsprinzip arbeitet, mit verschiedenen Tasten mit jeweils speziellen Funktionen. Eine Auswahl-, Festlegungs-, Setztaste ist als Multifunktionstaste vorgesehen. Mit dieser Taste werden verschiedene Funktionen ausgewählt. Nach Auswahl einer Funktion werden die hierzu angezeigten Werte über eine Einstellungstaste in Ihren Werten geändert. Wird die Multifunktionstaste danach eine längere Zeit dauerhaft betätigt, wird der ausgewählte Wert festgelegt und als Betriebsparameter gespeichert. Weiter hat die Multifunktionstaste die Funktion einer Einlerntaste, wonach beispielsweise ein erkannter Abstand des Sensors übernommen und eingelernt wird. Die genannten Einstellungsmöglichkeiten, wie beispielsweise eine Objektposition oder eine Schwellwerteinstellung, sind jeweils analoge Einstellmöglichkeiten, die eine Vielzahl von unterschiedlichen Werten zulassen. Zur Anzeige der unterschiedlichen Werte beispielsweise eines Entfernungsbereiches ist eine mehrstellige Anzeigevorrichtung erforderlich.

Aus der EP-A-0 605 252 ist Reflektor Lichtschranke bekannt, welche Lichtpulse aussendet und die reflektierten Lichtimpulse auswertet, um Objekte zu erkennen. Bei diesem Sensor werden zur Auswahl innerhalb eines Menüs von einzustellenden Funktionen zunächst zwei Tasten benötigt. Eine dritte Taste ist notwendig zur Anwahl einer bestimmten Funktion. Diese Tasten haben eine Doppelfunktion. Mit zwei Tasten wird zwischen den Menüs umgeschaltet und ein Einstellwert beispielsweise einen Verstärkungspegel eingestellt. Diese Eingabeeinheit, bestehend aus den Tasten und einer mehrstelligen Anzeigeeinheit ist dazu ausgebildet eine komplexe und vielfältige Anzahl von Einstellungsparametern einzugeben und einzustellen.

Aus der EP-A-1 331 433 ist eine Multistrahllichtschranke bekannt mit einzelnen Anzeigeelementen für die Anzeige eines Status eines einzelnen Strahls und Anzeigeelemente zur Anzeige, ob ein jeweiliger Strahl durch ein Objekt unterbrochen worden ist. Um für eine Vielzahl von optischen Strahlen nicht jeweils ein eigenes Anzeigeelement vorsehen zu müssen, können über eine Taste die Anzeigeelemente jeweils einer Gruppe von optischen Strahlen zugeordnet werden. Durch mehrmaliges Betätigen der Taste werden die Gruppen der optischen Strahlen nacheinander an den Anzeigeelementen angezeigt.

Davon ausgehend liegt der Erfindung die Aufgabe zugrunde, ein Lichtgitter der eingangs angegebenen Art zu schaffen, das einfach und in kostengünstiger Weise konfigurierbar ist.

Diese Aufgabe wird gelöst durch ein Lichtgitter mit den Merkmalen des Anspruchs 1.

Das erfindungsgemäße Sicherheits-Lichtgitter zur Überwachung eines Schutzfeldes weist eine Lichtsendeleiste und eine Lichtempfangsleiste auf, so dass eine Vielzahl zueinander paralleler und das Schutzfeld bildender Lichtschranken gebildet sind. In einer Steuer- und Auswerteeinheit, die die einzelnen Lichtschranken steuert und auswertet, ist bei Unterbrechung einer oder mehrerer Lichtschranken durch ein Objekt ein Warnsignal ableitbar. Über Konfigurationsmittel ist das Lichtgitter vor dem Einsatz konfigurierbar. Erfindungsgemäß sind die Konfigurationsmittel gebildet durch zwei Eingabeelemente und wenigstens ein Anzeigeelement, wobei zum Aktivieren eines Konfigurationsmodus beide Eingabeelemente gleichzeitig betätigbar sind. Die Konfigurationsparameter umfassen eine Aktivierung oder Deaktivierung einer Schützkontrolle, eine Aktivierung oder Deaktivierung einer Wiederanlaufsperre, eine hohe oder niedrige Reichweite, Auswahl eines Signals zur Anlage an einen Diagnoseausgang und/oder Auswahl einer von mehreren Mutingzeiten. Die Steuer- und Auswerteeinheit ist derart ausgelegt, dass die Eingabe der Konfigurationsparameter über die Eingabeelemente fehlersicher erfolgt, wobei ein Festhalten eines Eingabeelementes oder ein falsche Folge von Eingabeelementebetätigungen durch die Steuer- und Auswerteeinheit erkennbar ist und nicht zu einer Konfigurationsänderung führt.

Der wesentliche Vorteil der Erfindung besteht darin, dass die Eingabe der Konfigurationsdaten einerseits sehr einfach, schnell und komfortabel über nur zwei Eingabeelemente erfolgt und andererseits, dass keine zusätzlichen Geräte, wie PC, Gerätekommunikationsschnittstelle oder dergleichen, benötigt werden. Einfache Funktionen sind an- und abwählbar oder bieten eine Auswahlmöglichkeit. Es handelt sich nicht um komplexe oder vielfältige Einstellungen. Die erfindungsgemäße Ausbildung ist entsprechend kostengünstig. Um den Konfigurationsmodus fehlersicher aktivieren zu können sind beide Eingabeelemente gleichzeitig betätigbar.

Um den hohen Sicherheitsanforderungen zu genügen ist die Steuer- und Auswerteeinheit derart ausgelegt, dass die Eingabe von Konfigurationsdaten über die Eingabeelemente fehlersicher erfolgt. Das bedeutet, dass ein statisches Signal an einem der Eingabeelemente, z. B. durch Festhalten eines Tasters oder ein falsches Betätigen der Eingabeelemente durch die Steuer- und Auswerteeinheit erkennbar ist und nicht zu einer Konfigurationsänderung führt.

In konstruktiv einfacher Bauweise sind die zwei Eingabeelemente als Taster ausgebildet, da Taster auch sehr einfach zu bedienen sind.

Häufig werden in Lichtgittern Sieben-Segment-Anzeigen zur Anzeige von Betriebszuständen verwendet, so dass vorteilhafterweise eine solche auch für die Anzeige von Konfigurationsparametern verwendbar ist.

Um einen kompakten kostengünstigen Aufbau zu erhalten, sind die Konfigurationsmittel in die Lichtempfangsleiste integriert. Dadurch können zusätzliche Geräte eingespart werden.

Für eine intuitive und verständliche Eingabe von Konfigurationsdaten ist eines der Eingabeelemente zum Wählen einer Funktion und das andere zur Selektion der gewählten Funktion ausgelegt.

Im Folgenden wird die Erfindung anhand eines Ausführungsbeispiels unter Bezugnahme auf die Zeichnung im Einzelnen erläutert. In der Zeichnung zeigen:
- Fig. 1: eine schematische Darstellung eines erfindungsgemäßen Lichtgitters;
- Fig. 2: eine schematische Darstellung von Eingabe- und Anzeigeelementen von Konfigurationsmitteln einer Lichtempfangsleiste des Lichtgitters aus Fig. 1;
- Fig. 3: ein Ablaufdiagramm einer Konfigurierung.

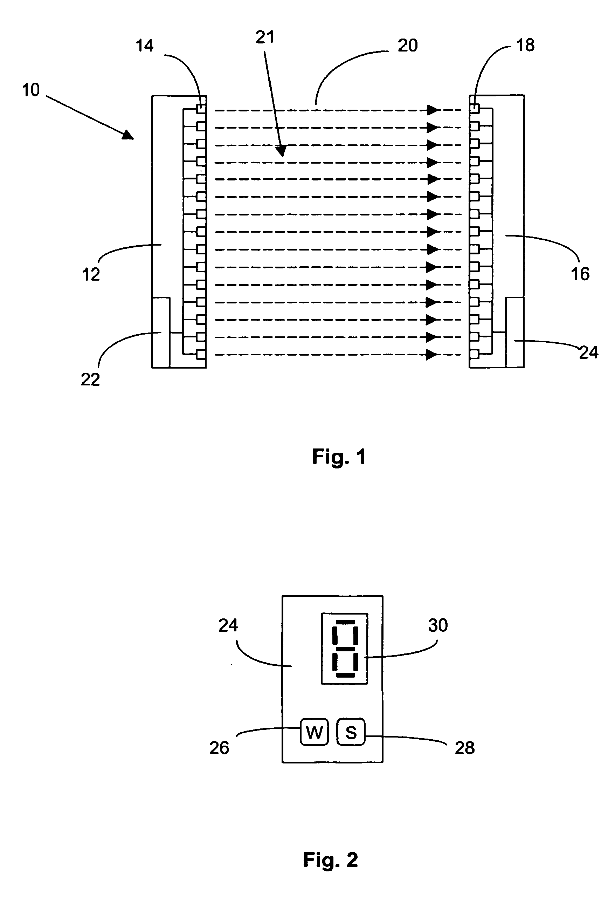

Ein erfindungsgemäßes Lichtgitter 10 weist eine Lichtsendeleiste 12 auf, die eine Reihe nebeneinander angeordneter Lichtsender 14 aufweist und eine Lichtempfangsleiste 16, die den Lichtsendern 14 entsprechende, ebenfalls nebeneinander angeordnete Lichtempfänger 18 aufweist. Jeweils gegenüberliegende Lichtsender 14 und Lichtempfänger 18 bilden in bekannter Weise eine Vielzahl zueinander paralleler Lichtschranken 20, deren Lichtstrahl in Fig. 1 durch gestrichelte Linien dargestellt ist. Das Lichtgitter 10 mit seinen Lichtschranken 20 definiert somit zwischen Sendeleiste 12 und Empfangsleiste 16 einen Überwachungsbereich mit einem Schutzfeld 21. Das Lichtgitter 10 weist weiter wenigstens eine Steuer- und Auswerteeinheit auf. In dem dargestellten Ausführungsbeispiel ist sowohl in der Sende- 12 als auch in der Empfangsleiste 16 wenigstens je eine Steuer- und Auswerteeinheit 22 bzw. 24 vorgesehen. Die Steuer- und Auswerteeinheit 22 steuert die einzelnen Lichtsender 14 der Sendeleiste 12 und die Steuer- und Auswerteeinheit 24 der Empfangsleiste steuert die Lichtempfänger 18 und wertet deren Signale aus, so dass bei Unterbrechung einer oder mehrerer Lichtschranken 20 durch ein Objekt ein Warnsignal aus der Steuer- und Auswerteeinheit 24 ableitbar ist. Dieses Signal kann auch zum Abschalten einer gefährlichen Maschine dienen.

Die grundsätzliche Funktionsweise eines solchen Lichtgitters ist z. B. in der DE 38 03 033 A1 beschrieben. Die einzelnen Lichtschranken 20 des Lichtgitters 10 werden zyklisch der Reihe nach aktiviert. Dabei werden die Lichtsender 14 und Lichtempfänger 18 auf optischem Wege über beispielsweise die erste und/oder letzte Lichtschranke synchronisiert, so dass immer der dem momentan sendenden Lichtsender gegenüberliegende Lichtempfänger aktiviert ist. Insbesondere ist dadurch eine elektrische Verbindung zwischen der Sendeleiste 12 und der Empfangsleiste 16 nicht notwendig.

Das erfindungsgemäße Lichtgitter ist derart ausgebildet, dass unterschiedliche Konfigurationen je nach Einsatzzweck einstellbar sind. Die entsprechende Konfiguration muss in das Lichtgitter vor einem Ersteinsatz oder auch nach einem Austausch eingespeichert werden. Je nach dem welche Funktionen an dem Lichtgitter einstellbar sind, sind die Funktionsparameter in einem Konfigurationsmodus vor Inbetriebnahme eingebbar. Diese Funktionen können beispielsweise sein:
- eine Aktivierung oder Deaktivierung einer Schützkontrolle,
- eine Aktivierung oder Deaktivierung einer Wiederanlaufsperre,
- eine hohe oder niedrige Reichweite,
- welches Signal an einem Diagnoseausgang anliegen soll,
- welche einer vorgegebenen Auswahl von Muting-Zeiten eingestellt werden soll.

Zur Eingabe der Konfigurationsparameter sind an dem Lichtgitter 10, vorzugsweise an der Steuer- und Auswerteeinheit 24 der Empfangsleiste 16, Konfigurationsmittel vorgesehen, die zwei Eingabeelemente, die als Taster 26 und 28 ausgebildet sind und ein Anzeigeelement, das als Sieben-Segment-Anzeige 30 ausgebildet ist, umfassen.

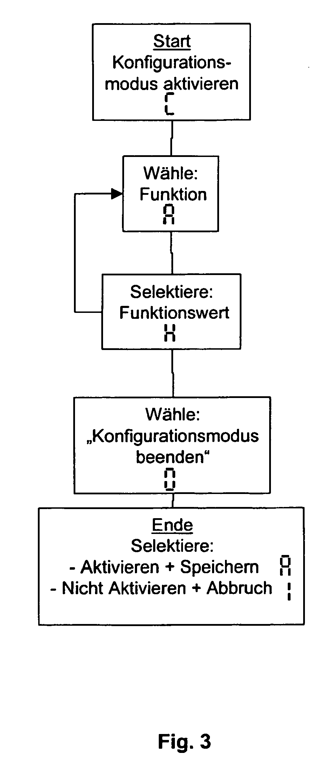

Um die einzelnen Merkmale der Erfindung und die Funktionsweise zu verdeutlichen, wird im Folgenden beispielhaft der Ablauf einer Konfiguration für eine bestimmte Funktion beschrieben. Es soll beispielsweise die Reichweite des Lichtgitters konfiguriert werden. Dieser Ablauf ist auch in Fig. 3 dargestellt.

Zunächst ist das Lichtgitter in den Konfigurationsmodus zu versetzen, also der Konfigurationsmodus zu aktivieren. Dazu werden beide Tasten 26 und 28 gleichzeitig für einen bestimmten Zeitraum gedrückt. Andere Aktivierungen sind möglich. So könnten z. B. beide Tasten zweimal hintereinander gleichzeitig gedrückt und wieder losgelassen werden.

Nach Aktivierung des Konfigurationsmodus erscheint an der Sieben-Segment-Anzeige 30 ein Symbol, das diesen Zustand symbolisiert, z. B. 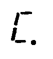

Dann ist durch Drücken der Taste 26 die gewünschte Funktion, die eingestellt werden soll, zu wählen. Es ist zu bemerken, dass alle in dem Konfigurationsmodus einstellbaren Funktionen und deren Funktionswerte einen bestimmten "Wert" in der Sieben-Segment-Anzeige haben. Als Symbol für die Reichweite ist in diesem Ausführungsbeispiel das folgende gewählt. 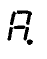

Die Taste 26 ist nun so oft zu drücken, bis das vorgenannte Symbol für die Reichweiteneinstellung erscheint. Dann ist über die zweite Taste 28 die Reichweite, also der gewünschte Funktionswert, zu selektieren. Wenn beispielsweise zwei verschiedenen Reichweiten "high" und "low" einstellbar sind und der höhere Reichweitenbereich eingestellt werden soll, ist die Taste 28 so oft zu drücken, bis z.B. das Symbol 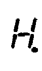 erscheint.

Damit ist die Reichweite konfiguriert. Entweder kann nun durch Drücken der Taste 26 eine weitere, zu konfigurierende Funktion angewählt werden oder der Konfigurationsmodus beendet werden. Eine Beendigung geschieht dadurch, dass mit der ersten Taste 26 die Funktion "Konfiguration beenden", die beispielsweise angezeigt wird durch das Symbol 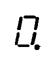 gewählt wird und anschließend mit der zweiten Taste 28 selektiert wird, ob die eingegeben Konfiguration gespeichert und der Konfigurationsmodus verlassen werden soll oder ob die eingegeben Konfiguration nicht gespeichert und der Konfigurationsmodus verlassen werden soll. Dazu ist mit der zweiten Taste 28 zunächst zu selektieren, ob gespeichert werden soll oder nicht, was durch die Symbole 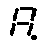 und 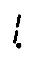 angezeigt wird,
Dann wird durch zweimaliges Betätigen des Tasters 28 die selektierte Funktion ausgeführt und der Konfigurationsmodus verlassen.

Ein besonderes Merkmal ist die Ausbildung der Steuer- und Auswerteeinheit, so dass eine fehlersichere Eingabe gewährleistet ist. Damit ist sichergestellt, dass beispielsweise ein dauerhaftes Drücken eines Tasters oder auch eine falsche Tastendruckfolge nicht dazu führt, dass eine nicht gewünschte Konfiguration eingestellt wird.

## Patentansprüche

1. Sicherheits-Lichtgitter zur Überwachung eines Schutzfeldes mit einer Lichtsendeleiste (12), die eine Reihe nebeneinander angeordneter Lichtsender (14) aufweist und einer Lichtempfangsleiste (16), die den Lichtsendern (14) entsprechende ebenfalls nebeneinander angeordnete Lichtempfänger (18) aufweist, so dass eine Vielzahl zueinander paralleler und das Schutzfeld (21) bildender Lichtschranken (20) gebildet sind, mit wenigstens einer Steuer- und Auswerteeinheit (24), die die einzelnen Lichtschranken steuert und auswertet, so dass bei Unterbrechung einer oder mehrerer Lichtschranken (20) durch ein Objekt ein Warnsignal ableitbar ist und mit Konfigurationsmitteln zum Eingeben von Konfigurationsparametern zum Konfigurieren des Lichtgitters (10), **dadurch gekennzeichnet,**
**dass** die Konfigurationsmittel gebildet sind durch zwei Eingabeelemente (26 und 28) und wenigstens ein Anzeigeelement (30),
**dass** zum Aktivieren eines Konfigurationsmodus beide Eingabeelemente (26 und 28) gleichzeitig zu betätigen sind,
**dass** die Konfigurationsparameter umfassen
- eine Aktivierung oder Deaktivierung einer Schützkontrolle,
- eine Aktivierung oder Deaktivierung einer Wiederanlaufsperre,
- eine hohe oder niedrige Reichweite,
- Auswahl eines Signals zur Anlage an einen Diagnoseausgang
- und/oder Auswahl einer von mehreren vorgegebenen Mutingzeiten
und **dass** die Steuer- und Auswerteeinheit (24) derart ausgelegt ist, dass die Eingabe der Konfigurationsparameter über die Eingabeelemente (26, 28) fehlersicher erfolgt, wobei ein Festhalten eines Eingabeelementes oder eine falsche Folge von Eingabeelementbetätigungen durch die Steuer und Auswerteeinheit erkennbar ist und nicht zu einer Konfigurationsänderung führt.

2. Lichtgitter nach einem der vorhergehenden Ansprüche, **dadurch gekennzeichnet, dass** die zwei Eingabeelemente als Taster (26 und 28) ausgebildet sind.

3. Lichtgitter nach einem der vorhergehenden Ansprüche, **dadurch gekennzeichnet, dass** das Anzeigeelement eine Sieben-Segment-Anzeige (30) ist.

4. Lichtgitter nach einem der vorhergehenden Ansprüche, **dadurch gekennzeichnet, dass** die Konfigurationsmittel in die Lichtempfangsleiste (16) integriert sind.

5. Lichtgitter nach einem der vorhergehenden Ansprüche, **dadurch gekennzeichnet, dass** eines der Eingabeelemente (26) zum Wählen einer Funktion und das andere zur Selektion eines Funktionswertes ausgelegt ist.

## Claims

1. Safety light grid for monitoring a protected area, with a light transmitting bar (12) having a series of light transmitters (14) arranged one next to the other, and a light receiving bar (16) having light receivers (18) which correspond to the light transmitters (14) and are likewise arranged one next to the other so as to form a large number of mutually parallel light barriers (20) forming the protected area (21), with at least one control and evaluation unit (24) which controls and evaluates the individual light barriers such that a warning signal can be derived if one or more light barriers (20) is/are interrupted by an object, and with configuration means for inputting configuration parameters for configuring the light grid (10), **characterized**
**in that** the configuration means are formed by two input elements (26 and 28) and at least one display element (30),
**in that** both input elements (26 and 28) must be operated simultaneously to activate a configuration mode,
**in that** the configuration parameters comprise
- activation or deactivation of an external-device monitoring function,
- activation or deactivation of a restart interlock function,
- a high or low scanning range,
- selection of a signal to be produced at a diagnostic output
- and/or selection of one of a plurality of muting periods
and **in that** the control and evaluation unit (24) is designed such that configuration parameters are input via the input elements (26, 28) in a fail-safe manner, with the control and evaluation unit detecting continuous operation of an input element or the operation of input elements in the wrong order, without resulting in a change in configuration.

2. Light grid according to one of the preceding claims, **characterized in that** the two input elements are in the form of buttons (26 and 28).

3. Light grid according to one of the preceding claims, **characterized in that** the display element is a seven-segment display (30).

4. Light grid according to one of the preceding claims, **characterized in that** the configuration means are integrated in the light receiving bar (16).

5. Light grid according to one of the preceding claims, **characterized in that** one of the input elements (26) is designed for selecting a function and the other for choosing a function value.

## Revendications

1. Grille lumineuse de sécurité pour le contrôle d'une zone de protection avec une baguette émettrice de lumière (12), qui présente une rangée d'émetteurs de lumière (14) disposés les uns à côté des autres et une baguette réceptrice de lumière (16), qui présente des récepteurs de lumière (18) disposés également les uns à côté des autres et correspondent aux émetteurs de lumière (14), de sorte qu'une pluralité de barrières lumineuses (20) parallèles entre elles et formant la zone de protection (21) est formée, avec au moins une unité de commande et d'analyse (24), qui commande et analyse les barrières lumineuses individuelles, de sorte que, en cas d'interruption d'une ou plusieurs barrières lumineuses (20) par un objet, un signal d'alerte peut être déduit et avec des moyens de configuration pour l'entrée de paramètres de configuration pour la configuration de la grille lumineuse (10), **caractérisée en ce que**,
les moyens de configuration sont formés par deux éléments d'entrée (26 et 28) et au moins un élément d'affichage (30),
**en ce que**, pour l'activation d'un mode de configuration, les deux éléments d'entrée (26 et 28) doivent être actionnés simultanément,
**en ce que** les paramètres de configuration comprennent
- une activation ou une désactivation du contrôle par contacteur-interrupteur,
- une activation ou une désactivation d'un blocage de redémarrage,
- une portée élevée ou faible,
- le choix d'un signal pour l'application à une sortie de diagnostic
- et/ou le choix d'une de plusieurs périodes de muting prédéfinies
et **en ce que** l'unité de commande et d'analyse (24) est conçue de telle sorte que l'entrée des paramètres de configuration par les éléments d'entrée (26, 28) s'effectue avec une protection contre les erreurs, un blocage d'un élément d'entrée ou une succession erronée de commandes d'élément d'entrée pouvant être aperçue par l'unité de commande et d'analyse et n'entraînant pas une modification de configuration.

2. Grille lumineuse selon l'une quelconque des revendications précédentes, **caractérisée en ce que** les deux éléments d'entrée sont conçus comme des boutons-poussoirs (26 et 28).

3. Grille lumineuse selon l'une quelconque des revendications précédentes, **caractérisée en ce que** l'élément d'affichage est un affichage à sept segments (30).

4. Grille lumineuse selon l'une quelconque des revendications précédentes, **caractérisée en ce que** les moyens de configuration sont intégrés dans la baguette réceptrice de lumière (16).

5. Grille lumineuse selon l'une quelconque des revendications précédentes, **caractérisée en ce que** l'un des éléments d'entrée (26) est conçu pour la sélection d'une fonction et l'autre pour la sélection d'une valeur de fonction.
